# EUROPÄISCHE PATENTSCHRIFT

(11) **EP 2 510 776 B1**
(45) Veröffentlichungstag und Bekanntmachung des Hinweises auf die Patenterteilung: **17.05.2017**
(21) Anmeldenummer: 12151026.7
(22) Anmeldetag: 13.01.2012
(51) Int. Cl.: A01D 43/08

(54) **Landwirtschaftliches Transportfahrzeug und Fahrzeugverbund**
Agricultural transport vehicle and vehicle combination
Véhicule de transport agricole et véhicule associé

(30) Priorität: 12.04.2011 DE 102011016743
(43) Veröffentlichungstag der Anmeldung: 17.10.2012
(73) Patentinhaber: CLAAS Selbstfahrende Erntemaschinen GmbH, 33428 Harsewinkel (DE)
(72) Erfinder: Diekhans, Norbert, 33335 Gütersloh (DE); Claussen, Frank, 33428 Harsewinkel (DE); Huster, Jochen, 33330 Gütersloh (DE); Reinecke, Max, 33775 Versmold (DE)

(56) Entgegenhaltungen:
- EP-A1- 1 219 158
- EP-A1- 2 266 383
- WO-A1-00/35265
- JP-A- 61 060 529
- US-A1- 2002 165 649

## Beschreibung

Die vorliegende Erfindung betrifft ein landwirtschaftliches Transportfahrzeug für die Übernahme von Material, insbesondere von Erntegut, von einem Ursprungsfahrzeug, insbesondere einer selbstfahrenden Erntemaschine wie etwa einem Feldhäcksler oder Mähdrescher, sowie einen Verbund von mehreren untereinander koordinierten Fahrzeugen.

Ein solches Transportfahrzeug bzw. ein Fahrzeugverbund sind aus WO 00/35265 A1 und aus EP 2 226 383 A1 bekannt. Ursprungsfahrzeug dieses herkömmlichen Verbunds sind ein oder mehrere Mähdrescher, die ein Feld beernten und das Erntegut an ein Transportfahrzeug übergeben. Das Transportfahrzeug ist ein Traktor mit Anhänger. Wenn der Anhänger voll ist, sucht der Traktor einen am Feldrand geparkten LKW auf, um das Erntegut auf diesen zu überladen.

Die Mähdrescher verfügen zum Überladen jeweils über einen Auswurfkrümmer, der das Erntegut in einem eng gebündelten Strahl auf den Anhänger überlädt. Wenn Traktor und Anhänger mit exakt derselben Geschwindigkeit nebeneinander herfahren, variiert die Position des Auswurfkrümmers relativ zum Anhänger nicht, und das Erntegut bildet auf dem Anhänger einen Schüttkegel. Wenn dieser die Ladekante des Anhängers erreicht, muss das Überladen auf den Hänger abgebrochen werden, da anderenfalls Erntegut verloren geht, und der Traktor muss erst seinerseits das Transportfahrzeug am Feldrand aufsuchen, um das Erntegut dort abzuladen, bevor das Überladen vom Mähdrescher fortgesetzt werden kann. Der Traktor legt daher unnötig lange Wege auf dem Feld zurück, was einerseits zu einer unerwünschten Bodenverdichtung führt und andererseits die Ökonomie des Erntevorgangs erheblich beeinträchtigt, da das Transportfahrzeug unnötig Kraftstoff verbraucht und die Zahl der Mähdrescher, die es gleichzeitig bedienen kann, reduziert ist.

Aufgabe der Erfindung ist, ein Transportfahrzeug bzw. einen Fahrzeugverbund zu schaffen, bei dem diese Nachteile vermieden sind.

Die Aufgabe wird zum einen gelöst durch ein landwirtschaftliches Transportfahrzeug für die Übernahme von Material, insbesondere von Erntegut, von einem fahrenden Ursprungsfahrzeug, mit einem von oben befüllbaren Transportbehälter zur Aufnahme des Materials, wenigstens einem Sensor zum Erfassen der Verteilung des Materials im Transportbehälter und einer Steuereinheit zum Variieren der Position des Transportfahrzeugs relativ zum fahrenden Ursprungsfahrzeug anhand der erfassten Verteilung des Materials. Indem der Sensor der Steuereinheit Informationen über unterschiedlich stark beladene Bereiche des Transportbehälters liefert, kann die Steuereinheit die Position des Transportfahrzeugs relativ zum Ursprungsfahrzeug jederzeit so anpassen, dass Material vom Ursprungsfahrzeug in einen relativ schwach beladenen Bereich des Transportbehälters geladen wird. Wenn auf diese Weise der Füllstand des Materials im Transportbehälter vergleichmäßigt wird, kann das Fassungsvermögen des Transportbehälters voll ausgenutzt und die Zahl der Fahrten des Transportfahrzeugs minimiert werden.

Die Steuereinheit sollte eingerichtet sein, die Geschwindigkeit des Ursprungsfahrzeugs abzuschätzen; um die Position relativ zum Ursprungsfahrzeug zu variieren, kann sie dann die Geschwindigkeit des Transportfahrzeugs zeitweilig abweichend von der abgeschätzten Geschwindigkeit einstellen.

Als Sensor zum Erfassen der Materialverteilung kommt vorzugsweise eine Kamera in Betracht. Ein Vorteil der Kamera gegenüber anderen Sensortypen ist, dass sie nicht nur eine Erfassung des Füllstands des Materials an verschiedenen Stellen des Transportbehälters, sondern auch eine Lokalisierung eines Überladestroms vom Ursprungsfahrzeug, wie etwa des Strahls eines Auswurfkrümmers, erlaubt und auf diese Weise gleichzeitig Aufschluss über die Position des Transportfahrzeugs relativ zum Ursprungsfahrzeug liefern kann.

Eine Kamera kann auch zum Erfassen des von dem Transportfahrzeug befahrenen Bodens und/oder zum Erfassen des Ursprungsfahrzeugs vorgesehen sein. Eine Erfassung des Ursprungsfahrzeugs ist insbesondere während der Annäherung des Transportfahrzeugs an das Ursprungsfahrzeug zur Vorbereitung des Überladens sinnvoll, z.B. damit die Steuereinheit anhand dieser Information die Annäherung an das Ursprungsfahrzeug ohne Notwenigkeit eines Fahrereingriffs selbsttätig steuern kann, oder nur, um einen Fahrer des Transportfahrzeugs vor einer gefährlichen Nähe zum Ursprungsfahrzeug zu warnen.

Zur Erfassung des Füllstands des Transportbehälters und zur Erfassung des Bodens und/oder des Ursprungsfahrzeugs kann dieselbe Kamera einsetzbar sein. Indem dieselbe Kamera zu verschiedenen Zeiten für verschiedene Aufgaben eingesetzt wird, können die Kosten des Transportfahrzeugs minimiert werden. Das Transportfahrzeug sollte ferner einen an den Transportbehälter angeschlossenen Auslass zum Überladen von Material aus dem Transportbehälter in einen externen Behälter, z.B. den Laderaum eines weiteren Fahrzeugs, aufweisen.

Vorzugsweise ist auch zum Erfassen des externen Behälters während des Überladens in diesen eine Kamera vorgesehen.

Vorzugsweise handelt es sich bei dieser um dieselbe Kamera, die auch zur Erfassung des Ursprungsfahrzeugs bzw. des Füllstands im Transportbehälter einsetzbar ist.

Die Steuereinheit des Transportfahrzeugs kann ferner eingerichtet sein, den Füllstand des externen Behälters zu überwachen und die Platzierung des Auslasses relativ zum externen Behälter in Abhängigkeit von dessen Füllstand bzw. vom Fortschritt des Überladens zu variieren. So können die Kosten eines entsprechenden Steuersystems am externen Behälter eingespart werden, und trotzdem kann eine gleichmäßige, vollständige Beladung auch des externen Behälters sichergestellt werden.

Ein Routenplanungssystem zum selbsttätigen Planen von Routen des Transportfahrzeugs zwischen wenigstens einem zu entladenden Ursprungsfahrzeug und einem Entladestützpunkt wie etwa dem externen Behälter ist vorzugsweise Bestandteil der Steuereinheit des erfindungsgemäßen Transportfahrzeugs.

Vorzugsweise ist dieses Routenplanungssystem eingerichtet, von dem Ursprungsfahrzeug in Echtzeit wenigstens den Ladezustand und die Position des Ursprungsfahrzeugs betreffende Daten zu empfangen, und anhand dieser Daten einen Treffpunkt des landwirtschaftlichen Transportfahrzeugs mit dem Ursprungsfahrzeug festzulegen. Auf diese Weise kann sichergestellt werden, dass das Transportfahrzeug keine unnötig langen Wege zurücklegt, dass aber dennoch das Ursprungsfahrzeug rechtzeitig entladen wird, um einen wirtschaftlichen, an Unterbrechungen armen Betrieb zu ermöglichen.

Um die Koordination des Transportfahrzeugs mit dem Ursprungsfahrzeug zu vereinfachen, kann das Routenplanungssystem des Transportfahrzeugs eingerichtet sein, eine Route auch des Ursprungsfahrzeugs festzulegen und an dieses zu übermitteln.

Die Steuereinheit kann ferner eingerichtet sein, das Transportfahrzeug autonom entlang einer von dem Routenplanungssystem geplanten Route zu navigieren.

Die Aufgabe wird ferner gelöst durch einen landwirtschaftlichen Fahrzeugverbund mit einem Transportfahrzeug wie oben beschrieben und wenigstens einem Ursprungsfahrzeug. Vorzugsweise ist das Ursprungsfahrzeug ein Mähdrescher oder ein anderes Erntefahrzeug, das über einen Tank zum Sammeln von Erntegut verfügt. Da ein solches Ursprungsfahrzeug nicht ständig von einem Transportfahrzeug begleitet sein muss, um das Erntegut zu übernehmen, kann ein einziges Transportfahrzeug mehrere Ursprungsfahrzeuge gleichzeitig bedienen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen erfindungsgemäßen Fahrzeugverbund im Einsatz; und
- Fig. 2 bis 4: Stadien des Überladens vom Mähdrescher auf das Transportfahrzeug.

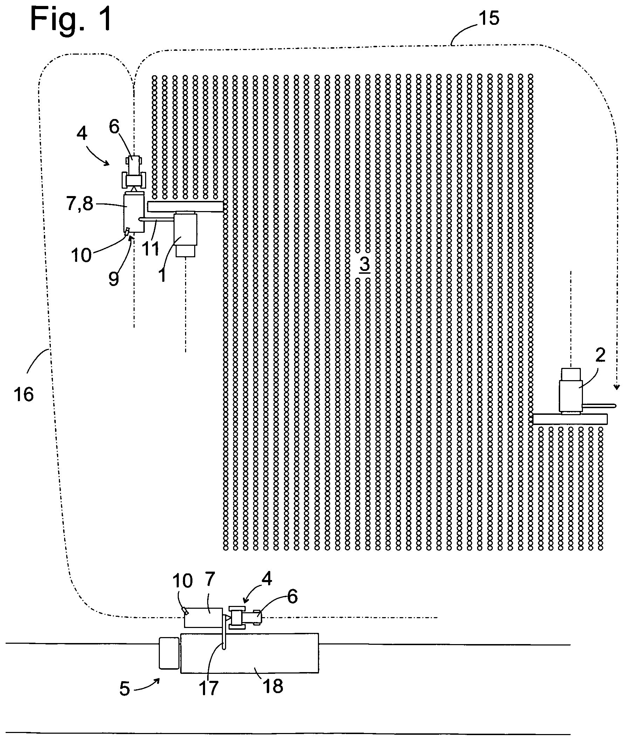

Fig. 1 zeigt eine typische Einsatzsituation eines erfindungsgemäßen Fahrzeugverbunds. Der Verbund umfasst hier zwei Mähdrescher 1, 2, die gleichzeitig eine Bestandsfläche 3 auf einem Feld beernten, ein Straßentransportfahrzeug 5 und ein Feldtransportfahrzeug 4. Bei dem in Fig. 1 dargestellten Einsatz zirkuliert das Feldtransportfahrzeug 4 zwischen den Mähdreschern 1, 2 und dem Straßentransportfahrzeug 5, um Korn von den Mähdreschern 1,2 abzuholen, wenn deren Korntank einen kritischen Füllstand erreicht, und es zum Straßentransportfahrzeug 5 zu befördern. Bei einem anderen Einsatz könnte das Straßentransportfahrzeug 5 auch entfallen und stattdessen das Feldtransportfahrzeug 4 das Korn direkt, auch per Straße, zu einem stationären Speicher befördern.

Ein Bordrechner des Feldtransportfahrzeugs 4, im Folgenden auch kurz als Transportfahrzeug 4 bezeichnet, ist in an sich bekannter Weise mit einem Funksender/-empfänger verbunden, um Satellitensignale, insbesondere GPS-Signale, zu empfangen und anhand dieser Signale die Position des Transportfahrzeugs 4 exakt zu bestimmen. Der Sender/Empfänger dient ferner der Funkkommunikation mit den Mähdreschern 1, 2, die mit entsprechenden Sender/Empfängern ausgestattet und in der Lage sind, ihre eigene Position zu bestimmen und an den Bordrechner des Transportfahrzeugs 4 zu melden.

Anhand von Kartendaten des zu bearbeitenden Feldes plant der Bordrechner des Transportfahrzeugs 4 Routen, die die Mähdrescher 1, 2 beim Beernten des Feldes abzufahren haben, und übermittelt diese per Funk an die Mähdrescher 1, 2. Die Mähdrescher 1, 2 können diese geplanten Routen autonom und vollautomatisch abfahren, oder die für jeweils einen der Mähdrescher 1, 2 festgelegte Route kann einem Fahrer des betreffenden Mähdreschers angezeigt werden, und es bleibt diesem überlassen, diese Route - ggf. unter Berücksichtigung von bei der Routenplanung noch nicht vorsehbaren Ereignissen - exakt abzufahren.

Anhand von Rückmeldungen der Mähdrescher 1, 2 über den Füllstand ihrer Korntanks ist der Bordrechner in der Lage abzuschätzen, wann die Mähdrescher 1, 2 jeweils entladen werden müssen, damit sie nicht wegen Überfüllung ihres Korntanks die Arbeit unterbrechen müssen, und an welchem Ort ihrer festgelegten Route sie sich zu diesem Zeitpunkt voraussichtlich befinden werden. Rechtzeitig vorher setzt der Bordrechner das Transportfahrzeug 4 in Richtung des abgeschätzten Treffpunkts in Bewegung, oder er gibt eine Aufforderung, eben dies zu tun, an einen Fahrer des Transportfahrzeugs 4 aus.

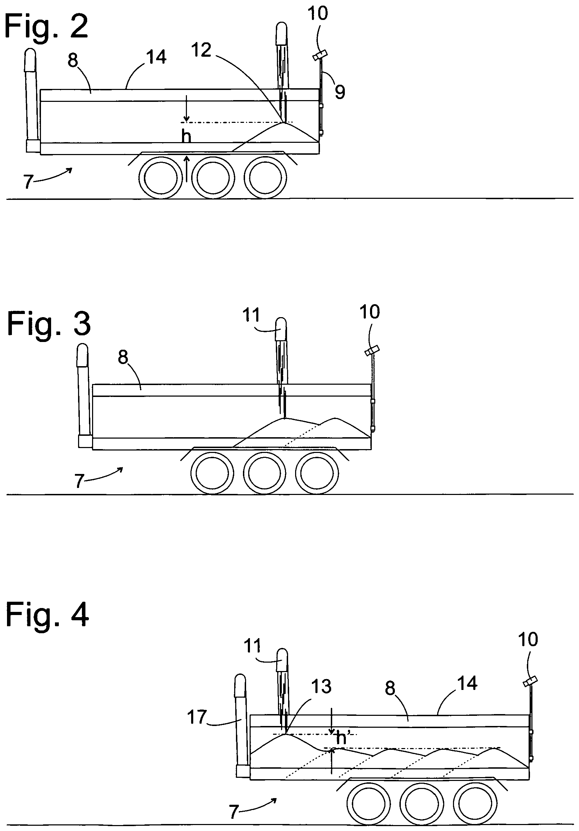

Das Transportfahrzeug 4 ist im hier betrachteten Fall ein Traktor 6 mit einem in Fig. 2 ff. schematisch dargestellten Anhänger 7, der einen in etwa quaderförmigen, nach oben offenen Transportbehälter 8 trägt. An einer Rückwand des Transportbehälters 8 ist ein aufrechter Mast 9 montiert, der an seiner Spitze eine an den Bordrechner gekoppelte Kamera 10 trägt. Die Kamera 10 ist an dem Mast 9 unter Kontrolle des Bordrechners in zwei Freiheitsgraden schwenkbar, um Objekte in unterschiedlichen Richtungen und unterschiedlichen Entfernungen anzupeilen. Bei Annäherung an den geplanten Treffpunkt, z.B. mit dem Mähdrescher 1, richtet der Bordrechner die Kamera 10 zunächst auf den Mähdrescher 1 aus, um die Position des Transportfahrzeugs 4 relativ zum Mähdrescher 1 abzuschätzen und den Transportbehälter 8 unter einem Auslassende eines Auswurfkrümmers 11 des Mähdreschers 1 in Position zu bringen. Während der Annährung an den Mähdrescher 1 schätzt der Bordrechner anhand der zeitlichen Entwicklung der Position des Transportfahrzeugs 4 relativ zum Mähdrescher 1 und der Geschwindigkeit des Transportfahrzeugs 4 die Geschwindigkeit des Mähdreschers 1 ab, und sobald eine zum Überladen geeignete Zielposition des Anhängers 7 unter dem Auswurfkrümmer 11 erreicht ist, gleicht der Bordrechner die Geschwindigkeit des Transportfahrzeugs 4 an die des Mähdrescher 1 an.

Die Kamera 10 wird nun auf die Ladefläche des Anhängers 7 ausgerichtet, wodurch auch das freie Ende des Auswurfkrümmers 11 in ihrem Blickfeld zu liegen kommt. So kann der Bordrechner anhand der Position und Größe des Auswurfkrümmers 11 in den von der Kamera 10 gelieferten Bildern während des anschließenden Überladens Änderungen der Relativposition von Transportfahrzeug 4 und Mähdrescher 1 jederzeit erkennen und ggf. korrigieren.

Aus den von der Kamera 10 gelieferten Bildern schätzt der Bordrechner ferner die Verteilung des Korns in Anhänger 7 ab. Wenn er z.B. anhand der Kamerabilder erkennt, dass wie in Fig. 2 dargestellt die Spitze eines Schüttkegels 12 unterhalb des Auslasses des Auswurfkrümmers 11 um ein kritisches Maß höher liegt als die Füllhöhe des Korns in anderen Bereichen des Transportbehälters 8, dann stellt er eine Zeit lang die Geschwindigkeit des Transportfahrzeugs 4 auf einen von der Geschwindigkeit des Mähdreschers 1 geringfügig abweichenden Wert, um den Auslass des Auswurfkrümmers in Längsrichtung des Anhängers 7 zu verschieben. Wenn z.B. wie in Fig. 2 gezeigt, mit dem Beladen des Anhängers 7 an dessen Heck begonnen wird, dann verlangsamt der Bordrechner bei Erreichen einer kritischen Höhe h des Schüttkegels 12 das Transportfahrzeug 4 zeitweilig, so dass es relativ zum Mähdrescher 1 zurückfällt und ein weiter vorn liegender Bereich des Transportbehälters 8 beladen wird, wie in Fig. 3 gezeigt.

Die kritische Höhe h kann der Höhe einer Ladekante 14 des Transportbehälters 8 entsprechen; d.h. der Transportbehälter 8 wird dann relativ zum Mähdrescher 1 verschoben, wenn der Schüttkegel die Ladekante 14 erreicht hat und darüber hinaus aufgeschüttetes Korn über die Ladekante 14 aus dem Transportbehälter 8 herausfallen würde.

Dieser Prozess des Verlagerns des Transportbehälters 8 relativ zum Mähdrescher 1 kann sich je nach Länge des Transportbehälters 8 unterschiedlich oft wiederholen, bis der Auswurfkrümmer 11 ein vorderes Ende des Transportbehälters 8 erreicht hat und der Anhänger 7 auf seiner gesamten Länge gleichmäßig beladen ist.

Wenn die kritische Höhe h unterhalb der Ladekante 14 liegt, schüttet der Auswurfkrümmer 11 am vorderen Ende des Transportbehälters 8, wie in Fig. 4 gezeigt, solange auf, bis die Höhe eines dort entstandenen Schüttkegels 13 die Füllhöhe im hinteren Bereich des Transportbehälters 8 um ein kritisches Maß h' überschreitet. Dieses kritische Maß h' kann kleiner sein als die Höhendifferenz h, die im Falle der Fig. 2 eine Veränderung der Position des Transportfahrzeugs 4 relativ zum Mähdrescher 1 ausgelöst hat; zweckmäßigerweise wird es um so kleiner festgelegt, je näher der mittlere Füllstand des Transportbehälters dessen Ladekante 14 kommt. Nun bewegt sich das Transportfahrzeug 4 jeweils zeitweilig schneller als der Mähdrescher 1, um schrittweise von vorn nach hinten den Transportbehälter 8 auf seiner gesamten Länge bis auf die Höhe des Schüttkegels 13 aufzufüllen. Auf diese Weise wandert der Auswurfkrümmer 11 über den Anhänger 7 in dessen Längsrichtung eventuell mehrmals hin und her, bis der Korntank des Mähdreschers 1 leer ist.

Wenn das Fassungsvermögen des Anhängers 7 ausreicht, um den Inhalt eines weiteren Korntanks aufzunehmen, plant der Bordrechner für das Transportfahrzeug 4 eine Route 15 (siehe Fig. 1), auf der es noch den Mähdrescher 2 aufsuchen kann, um diesen zu entladen. Anderenfalls steuert das Transportfahrzeug auf einer Route 16 den Straßentransporter 5 an, um das gesammelte Korn an diesen zu überladen.

Wenn das Transportfahrzeug 4 den Straßentransporter 5 erreicht, richtet sich die Kamera 10 auf diesen aus, um Lage und Ausdehnung eines Laderaums 18 des Straßentransporters 5 zu erfassen, und während des Überladens auf den Straßentransporter 5 steuert der Bordrechner in Kenntnis der Länge des Laderaums 18 und der auf dem Anhänger 7 versammelten Kornmenge eine schrittweise oder kontinuierliche Vorbeifahrt des Transporters 4 an dem Laderaum 18 derart, dass, wenn ein Auswurfkrümmer 17 des Transportfahrzeugs 4 das Ende des Laderaums 18 erreicht hat, der Anhänger 7 leer ist. So ist eine gleichmäßige Verteilung des Korns im Laderaum 18 und damit eine gute Ausnutzung der Ladekapazität des Straßentransporters 5 gewährleistet, ohne das dieser über eigene Mittel zum Erfassen der Ladungsverteilung und zum Steuern des Überladevorgangs verfügen müsste.

Eine alternative Strategie zum Überladen in den Laderaum 18 basiert auf dessen Überwachung durch die Kamera 10. Zwar kann diese im Allgemeinen nicht den Boden des Laderaums 18 sehen, wohl aber das Korn darin, wenn sich der Füllstand im Laderaum 18 dessen Oberkante nähert. Die Steuereinheit platziert demnach zu Beginn des Überladens den Auswurfkrümmer 17 an einem Ende des Laderaums 18, oder, falls der Füllstand an diesem Ende bereits eine maximal zulässige Höhe erreicht hat, sucht sie ausgehend von diesem Ende einen noch aufnahmefähigen Bereich des Laderaums 18. Wenn ein aufnahmefähiger Bereich gefunden ist, belädt sie diesen, bis dort die maximal zulässige Höhe erreicht ist, und bewegt dann das Transportfahrzeug 4 weiter, bis wieder ein aufnahmefähiger Bereich erreicht ist. Auch so kann der gesamte Laderaum 18 im Laufe eines oder mehrerer Überladevorgänge gleichmäßig befüllt werden.

### Bezugszeichen

- 1: Mähdrescher
- 2: Mähdrescher
- 3: Bestandsfläche
- 4: Feldtransportfahrzeug
- 5: Straßentransportfahrzeug
- 6: Traktor
- 7: Anhänger
- 8: Transportbehälter
- 9: Mast
- 10: Kamera
- 11: Auswurfkrümmer
- 12: Schnittkegel
- 13: Schnittkegel
- 14: Ladekante
- 15: Weg
- 16: Weg
- 17: Aufwurfkrümmer
- 18: Laderaum

## Patentansprüche

1. Landwirtschaftliches Transportfahrzeug (4) für die Übernahme von Material, insbesondere Erntegut, von einem fahrenden Ursprungsfahrzeug (1, 2) während der Fahrt benachbart zum Ursprungsfahrzeug (1, 2), mit einem von oben befüllbaren Transportbehälter (8) zur Aufnahme des Materials, und einer Steuereinheit zum Variieren der Position des Transportfahrzeugs (4) relativ zum fahrenden Ursprungsfahrzeug (1, 2) anhand einer erfassten Verteilung des Materials, **dadurch gekennzeichnet, dass** das Erfassen der Verteilung des Materials im Transportbehälter (8) mittels Sensor (10) erfolgt und der Sensor (10) dem Transportbehälter (8) zugeordnet ist.

2. Landwirtschaftliches Transportfahrzeug nach Anspruch 1, **dadurch gekennzeichnet, dass** die Steuereinheit eingerichtet ist, die Geschwindigkeit des Ursprungsfahrzeugs (1) abzuschätzen und zum Variieren der Position die Geschwindigkeit des Transportfahrzeugs (4) abweichend von der abgeschätzten Geschwindigkeit einzustellen.

3. Landwirtschaftliches Transportfahrzeug nach Anspruch 1 oder 2, **dadurch gekennzeichnet, dass** der Sensor eine Kamera (10) ist.

4. Landwirtschaftliches Transportfahrzeug nach einem der vorhergehenden Ansprüche, **dadurch gekennzeichnet, dass** wenigstens eine Kamera (10) zum Erfassen des Ursprungsfahrzeugs (1, 2) vorgesehen ist.

5. Landwirtschaftliches Transportfahrzeug nach einem der vorhergehenden Ansprüche, **dadurch gekennzeichnet, dass** die Kamera (10) dem Transportbehälter (8) zugeordnet ist.

6. Landwirtschaftliches Transportfahrzeug nach Anspruch 4, **dadurch gekennzeichnet, dass** die eine Kamera (10) zur Erfassung des Füllstands und zur Erfassung des Ursprungsfahrzeugs (1, 2) einsetzbar ist.

7. Landwirtschaftliches Transportfahrzeug nach einem der vorhergehenden Ansprüche, **dadurch gekennzeichnet, dass** es einen an den Transportbehälter (8) angeschlossenen Auslass (17) zum Überladen von Material in einen externen Behälter (16) aufweist.

8. Landwirtschaftliches Transportfahrzeug nach Anspruch 6, **dadurch gekennzeichnet, dass** es wenigstens eine Kamera (10) zum Erfassen des externen Behälters (16) während des Überladens aufweist.

9. Landwirtschaftliches Transportfahrzeug nach Anspruch 6 oder 7, **dadurch gekennzeichnet, dass** die Steuereinheit eingerichtet ist, die Platzierung des Auslasses (17) relativ zum externen Behälter (16) entsprechend dem Füllstand des Transportbehälters (8) zu variieren.

10. Landwirtschaftliches Transportfahrzeug nach Anspruch 6 oder 7, **dadurch gekennzeichnet, dass** die Steuereinheit eingerichtet ist, den Füllstand des externen Behälters (16) zu überwachen und die Platzierung des Auslasses (17) relativ zum externen Behälter (16) in Abhängigkeit von dessen Füllstand zu variieren.

11. Landwirtschaftliches Transportfahrzeug nach einem der vorhergehenden Ansprüche, **dadurch gekennzeichnet, dass** die Steuereinheit ein Routenplanungssystem zum selbsttätigen Planen von Routen (15, 16) des Transportfahrzeugs (4) zwischen wenigstens einem zu entladenden Ursprungsfahrzeug (1, 2) und einem Entladestützpunkt (5) aufweist.

12. Landwirtschaftliches Transportfahrzeug nach Anspruch 9, **dadurch gekennzeichnet, dass** das Routenplanungssystem eingerichtet ist, von dem Ursprungsfahrzeug (1, 2) in Echtzeit wenigstens den Ladezustand und die Position des Ursprungsfahrzeugs (1, 2) betreffende Daten zu empfangen, und anhand dieser Daten einen Treffpunkt des landwirtschaftlichen Transportfahrzeugs (4) mit dem Ursprungsfahrzeug (1, 2) festzulegen.

13. Landwirtschaftliches Transportfahrzeug nach Anspruch 9 oder 10, **dadurch gekennzeichnet, dass** das Routenplanungssystem eingerichtet ist, eine Route des Ursprungsfahrzeugs (1, 2) festzulegen und an das Ursprungsfahrzeug (1, 2) zu übermitteln.

14. Landwirtschaftliches Transportfahrzeug nach Anspruch 9, 10 oder 11, **dadurch gekennzeichnet, dass** die Steuereinheit eingerichtet ist, das Transportfahrzeug (4) autonom entlang einer von dem Routenplanungssystem geplanten Route (15, 16) zu navigieren.

15. Landwirtschaftlicher Fahrzeugverbund mit einem Transportfahrzeug (4) nach einem der vorhergehenden Ansprüche und wenigstens einem Ursprungsfahrzeug (1, 2), **dadurch gekennzeichnet, dass** das Ursprungsfahrzeug (1, 2) ein Mähdrescher ist.

## Claims

1. An agricultural transport vehicle (4) for receiving material, in particular crop material, from a moving original vehicle (1, 2) while it is moving in adjacent relationship with the original vehicle (1, 2) having a transport container (8) which can be filled from above for receiving the material and a control unit for varying the position of the transport vehicle (4) relative to the moving original vehicle (1, 2) on the basis of a detected distribution of the material, **characterised in that** detection of the distribution of the material in the transport container (8) is effected by means of a sensor (10) and the sensor (10) is associated with the transport container (8).

2. An agricultural transport vehicle according to claim 1 **characterised in that** the control unit is adapted to estimate the speed of the original vehicle (1) and to adjust the speed of the transport vehicle (4) differing from the estimated speed to vary the position.

3. An agricultural transport vehicle according to claim 1 or claim 2 **characterised in that** the sensor is a camera (10).

4. An agricultural transport vehicle according to one of the preceding claims **characterised in that** there is provided at least one camera (10) for detecting the original vehicle (1, 2).

5. An agricultural transport vehicle according to one of the preceding claims **characterised in that** the camera (10) is associated with the transport container (8).

6. An agricultural transport vehicle according to claim 4 **characterised in that** the one camera (10) can be used for detection of the filling level and for detection of the original vehicle (1, 2).

7. An agricultural transport vehicle according to one of the preceding claims **characterised in that** it has an outlet (17) connected to the transport container (8) for transloading material into an external container (16).

8. An agricultural transport vehicle according to claim 6 **characterised in that** it has at least one camera (10) for detecting the external container (16) during the transloading operation.

9. An agricultural transport vehicle according to claim 6 or claim 7 **characterised in that** the control unit is adapted to vary the placement of the outlet (17) relative to the external container (16) to correspond to the filling level of the transport container (8).

10. An agricultural transport vehicle according to claim 6 or claim 7 **characterised in that** the control unit is adapted to monitor the filling level of the external container (16) and to vary the placement of the outlet (17) relative to the external container (16) in dependence on its filling level.

11. An agricultural transport vehicle according to one of the preceding claims **characterised in that** the control unit has a route planning system for automatically planning routes (15, 16) of the transport vehicle (4) between at least one original vehicle (1, 2) to be unloaded and an unloading support point (5).

12. An agricultural transport vehicle according to claim 9 **characterised in that** the route planning system is adapted to receive from the original vehicle (1, 2) in real time data concerning at least the loading state and the position of the original vehicle (1, 2) and on the basis of said data to establish a meeting point of the agricultural transport vehicle (4) with the original vehicle (1, 2).

13. An agricultural transport vehicle according to claim 9 or claim 10 **characterised in that** the route planning system is adapted to establish a route for the original vehicle (1, 2) and to communicate it to the original vehicle (1, 2).

14. An agricultural transport vehicle according to claim 9, claim 10 or claim 11 **characterised in that** the control unit is adapted to navigate the transport vehicle (4) autonomously along a route (15, 16) planned by the route planning system.

15. An agricultural vehicle combination comprising a transport vehicle (4) according to one of the preceding claims and at least one original vehicle (1, 2), **characterised in that** the original vehicle (1, 2) is a combine harvester.

## Revendications

1. Véhicule de transport agricole (4) pour prendre en charge de la matière, en particulier du produit récolté, à partir d'un véhicule d'origine roulant (1, 2) pendant la marche à côté du véhicule d'origine (1, 2), comprenant un contenant de transport (8) chargeable par le haut pour recevoir la matière, et comprenant une unité de commande pour faire varier la position du véhicule de transport (4) par rapport au véhicule d'origine roulant (1, 2) sur la base de la répartition détectée de la matière, **caractérisé en ce que** la détection de la répartition de la matière dans le contenant de transport (8) s'effectue au moyen d'un capteur (10), et le capteur (10) est associé au contenant de transport (8).

2. Véhicule de transport agricole selon la revendication 1, **caractérisé en ce que** l'unité de commande est agencée de façon à estimer la vitesse du véhicule d'origine (1) et, pour faire varier la position, à régler la vitesse du véhicule de transport (4) en s'écartant de la vitesse estimée.

3. Véhicule de transport agricole selon la revendication 1 ou 2, **caractérisé en ce que** le capteur est une camera (10).

4. Véhicule de transport agricole selon une des revendications précédentes, **caractérisé en ce qu'**au moins une camera (10) est prévue pour détecter le véhicule d'origine (1, 2).

5. Véhicule de transport agricole selon une des revendications précédentes, **caractérisé en ce que** la camera (10) est associée au contenant de transport (8).

6. Véhicule de transport agricole selon la revendication 4, **caractérisé en ce que** l'une des cameras (10) peut être mise en oeuvre pour détecter le niveau de remplissage et pour détecter le véhicule d'origine (1, 2).

7. Véhicule de transport agricole selon une des revendications précédentes, **caractérisé en ce qu'**il comporte une sortie (17) reliée au contenant de transport (8) pour transférer de la matière dans un contenant externe (16).

8. Véhicule de transport agricole selon la revendication 6, **caractérisé en ce qu'**il comporte au moins une camera (10) pour détecter le contenant externe (16) pendant le transfert.

9. Véhicule de transport agricole selon la revendication 6 ou 7, **caractérisé en ce que** l'unité de commande est agencée pour faire varier le placement de la sortie (17) par rapport au contenant externe (16) en fonction du niveau de remplissage du contenant de transport (8).

10. Véhicule de transport agricole selon la revendication 6 ou 7, **caractérisé en ce que** l'unité de commande est agencée pour surveiller le niveau de remplissage du contenant externe (16) et pour faire varier le placement de la sortie (17) par rapport au contenant externe (16) en fonction du niveau de remplissage de celui-ci.

11. Véhicule de transport agricole selon une des revendications précédentes, **caractérisé en ce que** l'unité de commande comporte un système de planification d'itinéraire pour planifier automatiquement des itinéraires (15, 16) du véhicule de transport (4) entre au moins un véhicule d'origine (1, 2) à décharger et un poste de déchargement (5).

12. Véhicule de transport agricole selon la revendication 9, **caractérisé en ce que** le système de planification d'itinéraire est agencé pour recevoir depuis le véhicule d'origine (1, 2), en temps réel, des données concernant au moins l'état de chargement et la position du véhicule d'origine (1, 2) et pour, à l'aide de ces données, définir un point de rencontre du véhicule de transport agricole (4) avec le véhicule d'origine (1, 2).

13. Véhicule de transport agricole selon la revendication 9 ou 10, **caractérisé en ce que** le système de planification d'itinéraire est agencé pour définir un itinéraire du véhicule d'origine (1, 2) et pour le transmettre au véhicule d'origine (1, 2).

14. Véhicule de transport agricole selon la revendication 9, 10, ou 11, **caractérisé en ce que** l'unité de commande est agencée pour déplacer le véhicule de transport (4) de manière autonome suivant un itinéraire (15, 16) planifié par le système de planification d'itinéraire.

15. Combinaison de véhicules agricoles comprenant un véhicule de transport (4) selon une des revendications précédentes et au moins un véhicule d'origine (1, 2), **caractérisé en ce que** le véhicule d'origine (1, 2) est une moissonneuse-batteuse.
